# EUROPÄISCHE PATENTSCHRIFT

(11) **EP 2 791 523 B1**
(45) Veröffentlichungstag und Bekanntmachung des Hinweises auf die Patenterteilung: **16.11.2016**
(21) Anmeldenummer: 12799190.9
(22) Anmeldetag: 12.12.2012
(51) Int. Cl.: F16C 33/42, F16C 33/38, F16C 19/06

(54) **KUGELLAGERKÄFIG, SOWIE HIERMIT VERSEHENES RILLENKUGELLAGER**
BALL BEARING CAGE AND GROOVE BALL BEARING INCLUIDING SAME
CAGE DE ROULEMENT À BILLES ET ROULEMENT A RAINURE AVEC UNE TELLE CAGE

(30) Priorität: 15.12.2011 DE 102011088640
(43) Veröffentlichungstag der Anmeldung: 22.10.2014
(73) Patentinhaber: Schaeffler Technologies AG & Co. KG, 91074 Herzogenaurach (DE)
(72) Erfinder: REIMCHEN, Alexander, 91074 Herzogenaurach (DE); BOHR, Andreas-Johann, 91074 Herzogenaurach (DE); HERBST, Stefan, 91052 Erlangen (DE)
(86) Internationale Anmeldenummer: PCT/EP2012/075157
(87) Internationale Veröffentlichungsnummer: WO 2013/087662

(56) Entgegenhaltungen:
- JP-A- 2003 013 962
- US-A- 6 010 248
- US-A1- 2011 069 918

## Beschreibung

Die Erfindung bezieht sich auf einen Kugellagerkäfig gemäß dem Oberbegriff von Patentanspruch 1.

### Hintergrund der Erfindung

Aus US 2011/0069918 A, sowie auch aus JP 2003 013962 ist ein Kugellagerkäfig der oben genannten Art bekannt, bei welchem im seitlichen Führungstaschenbereich eine rinnenartige Vertiefung ausgebildet ist. Sowohl die sich unterhalb des Radialniveaus dieser Vertiefung erstreckenden Kontaktbereiche der jeweiligen Käfigführungstasche, als auch die sich radial außerhalb jener Vertiefung erstreckenden Kontaktbereiche der jeweiligen Käfigführungstasche sind als konkav gekrümmte Bereiche ausgebildet.

Aus US 6,010,248 A ist ein Kugellagerkäfig bekannt, bei welchem im seitlichen Führungstaschenbereich sphärisch konkave Führungsmulden ausgebildet sind. Diese Führungsmulden erstrecken sich über einen relativ kurzen Umfangsbereich des zu führenden Wälzkörpers.

Aus DE 925 203 A ist ein Kugellagerkäfig der vorgenannten Bauart bekannt. Die beiden Käfighälften sind hierbei im Bereich von Verbindungsabschnitten vernietet oder durch eine spezielle durch die Käfighälften gebildete Verbindungsstruktur miteinander verbunden.

Aus DE 39 39 438 A1 ist ebenfalls ein Kugellagerkäfig für ein Rillenkugellager bekannt, welcher aus zwei Ringelementen zusammengesetzt ist. Die Ringelemente sind so gestaltet, dass die darin gebildeten Kugelführungstaschen in einer Draufsicht auf eine Kugelführungstasche eine unrunde Kontur aufweisen.

Aus DE 36 40 633 A1 ist schließlich ein weiterer, aus zwei Ringelementen zusammengesetzter Kugellagerkäfig für ein Rillenkugellager bekannt, bei welchem die Kontaktebene zwischen den beiden Ringelementen axial gegenüber einer durch die Kugeltaschenzentren definierten Kugelzentrumsebene versetzt ist.

Blechkäfige mit innerlich sphärisch konkaven Taschen (Kugelkalotten-Taschen) finden in großer Breite bei Rillenkugellagern Anwendung. Der Käfig besteht dabei typischerweise aus zwei ringartigen Käfighälften, die axial zusammengesetzt und auf verschiedenste Weisen miteinander verbunden werden können (z.B. Nietkäfige; Lappenkäfige und Schweißkäfige). Die Kugeln werden dabei in der Funktionslage (eingebaut im Lager) vom Käfig in den kugelförmigen Taschen geführt. Dabei wird darauf geachtet, dass der Käfig wälzkörpergeführt bleibt, d.h. dass der Käfig die Lagerringe nicht berührt. Die Wälzkörperführung bzw. das Radialspiel wird über die Ringkalottengeometrie der jeweiligen Kugelführungstasche festgelegt. Bei der Auslegung/Definition des Kugeldurchhanges wird üblicherweise auf die Idealgeometrie abgestellt. Die radiale Freigängigkeit wird dabei durch den Durchmesser der Käfigtasche an den Käfigaußenkante festgelegt.

Blechkäfige dieser Bauart werden durch Stanzen (Scherschneiden) hergestellt. Somit weisen alle Stanzflächen auf der einen Seite einen Stanzeinzug und auf der anderen Seite einen Stanzausriss/Stanzgrat auf. Um den Lauf der Kugel nicht zu stören (Geräusch, Reibung) wird die Stanzrichtung normalerweise so gewählt, dass der Stanzeinzug auf der Innenseite der Kugeltasche liegt. Da das Blech mit dem steigenden Kugeldurchmesser auch dicker wird, steigt auch die Dimension des Stanzeinzugs. Als Folge ist der Kugeldurchhang groß und der Käfig kann u.U. am Lagerring anlaufen.

### Aufgabe der Erfindung

Der Erfindung liegt die Aufgabe zugrunde, einen Kugellagerkäfig für ein Rillenkugellager zu schaffen, welcher kostengünstig herstellbar ist und sich durch ein vorteilhaftes mechanisches Betriebsverhalten auszeichnet.

### Beschreibung der Erfindung

Diese Aufgabe wird erfindungsgemäß durch einen Kugellagerkäfig mit den in Patentanspruch 1 angegebenen Merkmalen gelöst.

Dadurch wird es auf vorteilhafte Weise möglich, einen Kugellagerkäfig zu schaffen, bei welchem die Kontaktpunkte der jeweiligen Kugel mit dem Käfig in Richtung der Taschenmitte verschoben sind. Hierdurch wird in vorteilhafter Weise die Auswirkung des sog. Stanzeinzuges auf die radiale Freigängigkeit der jeweiligen Kugel in der ihr zugeordneten Käfigtasche reduziert, insbesondere hat der Stanzeinzug keinen Einfluss mehr auf den Kugeldurchhang. Zudem wird es durch diese Gestaltung in vorteilhafter Weise möglich, die Kontaktkräfte der Kugel in der Käfigtasche gegenüber konventionellen Käfigbauformen zu reduzieren. Entsprechend reduziert sich in vorteilhafter Weise auch das durch Reibkräfte zwischen Kugel und Käfig erzeugte Reibmoment.

Der Rinnenquerschnitt ist vorzugsweise derart gestaltet, dass die Kugelkontaktzonen zum inneren bzw. äußeren Rand der Ringelemente einen Radialabstand von wenigstens der Ringbreite einhalten und der damit außerhalb der Kugelkontaktzonen liegende Randbereich der Ringelemente die Kugeln nicht zu kontaktieren vermag.

Bei dem erfindungsgemäßen Kugellagerkäfig hat die Käfigtasche zumindest in bestimmten Umfangszonen im Querschnitt eine "Dachform". Die Kontaktpunkte zwischen Kugel und Käfig liegen noch deutlich innerhalb der Innengeometrie der Käfigtasche. Das erfindungsgemäße Konzept eignet sich insbesondere für Rillenkugellager mit größeren Abmessungen.

Die Erfindung richtet sich im Kern auf die Ausführung eines aus Stahlblech hergestellten Kugelkäfigs für Rillenkugellager. Die Erfindung ist sowohl im Industrie- als auch im Automotivbereich anwendbar. Die Form der Käfigtasche wird erfindungsgemäß so gestaltet, dass die radiale Freigängigkeit (Kugeldurchhang) der Kugel durch einen von der Randgeometrie der Ringelemente weniger ausgeprägt beeinflussten Bereich der Ringelemente festgelegt wird und damit exakt definiert und eingehalten werden kann.

Gemäß einer besonders bevorzugten Ausführungsform der Erfindung ist der Kugellagerkäfig derart gestaltet, dass die innere Kugelkontaktzone durch einen im Axialschnitt lokal geradlinigen inneren Wandungsabschnitt gebildet ist. Vorzugsweise ist auch die äußere Kugelkontaktzone durch einen im Axialschnitt lokal geradlinigen äußeren Wandungsabschnitt gebildet. Bei dieser Gestaltung ergeben sich in vorteilhafter Weise Schmierspaltgeometrien durch welche der Schmierfilmaufbau zwischen Käfig und Kugel unterstützt wird. Diese beiden Wandungsabschnitte sind zueinander unter einem Stumpfen Winkel angestellt. Der diese beiden Wandungsabschnitte verbindende Übergangsbereich, d.h. die Tal- oder Rinnensole kontaktiert die Kugel nicht, sonder bildet zur Kugel einen Spalt wenn die Kugel an den Kugelkontaktzonen anläuft.

Der erfindungsgemäße Rillenkugellagerkäfig ist vorzugsweise so gestaltet, dass die beiden im Axialschnitt geradlinigen inneren und äußeren Wandungsabschnitte über einen Rinnenbodenabschnitt verbunden sind, und dass in diesem Rinnenbodenabschnitt eine Krümmung vorliegt, deren Radius kleiner ist als der Kugelradius. Die Kugelführungstaschen können hierbei so gestaltet sein, dass diese die jeweilige Kugel mit einem geringen Laufspiel umgreifen und sich eine geringe radiale Kugelfreigängigkeit ergibt.

Die Ringelemente werden vorzugsweise als Stanz-Umformbauteile gefertigt. Es ist auch möglich, die Ringelemente aus einem Bandmaterial zu fertigen und die Stoßstellen entweder zu verbinden oder beim Zusammensetzten der Ringelemente so zu legen, dass die Stoßstelle eines Ringelementes durch das andere Ringelement überbrückt wird.

Die Verbindung der beiden Ringelemente erfolgt vorzugsweise indem die beiden Ringelemente im Bereich der Sitzflächen vernietet werden. Alternativ hierzu ist es auch möglich, die Ringelemente zu verschweißen, zu verlöten, oder anderweitig durch geeignete geometrische Strukturen zu verbinden.

Vorzugsweise beträgt die radiale Breite der Ringelemente im Bereich der Kugelführungstaschen in etwa 40% bis 55% insbesondere 44% des Kugeldurchmessers. Die radiale Freigängigkeit der Kugel in der Kugelführungstasche liegt vorzugsweise im Bereich von 2% bis 12% des Kugeldurchmessers. Der Radialabstand der inneren Grenzen der Kugelkontaktzonen liegt vorzugsweise im Bereich von 20% bis 30%, der radialen Breite der Ringelemente. Der Abstand der Außengrenzen der beiden Kugelkontaktzonen liegt vorzugsweise bei etwa 80% der Ringbreite.

Der erfindungsgemäße Kugellagerkäfig besteht aus zwei axial zusammengesetzten Ringelementen. Diese bilden in zusammengesetzten Zustand Kugelführungstaschen. Diese Kugelführungstaschen erstrecken sich auf einem zur Lagerachse koaxialen Zylindermantel und umgreifen die Kugeln äquatorial. Im wesentlichen auf Höhe der Umlaufbahn der Kugelzentren ist die Geometrie der Innenwandung der Kugelführungstaschen so abgestimmt, dass sich ein im Axialschnitt mondsichelartiger Zwischenraum zwischen der Innenwandung der Kugelführungstasche und der umgriffenen Kugel ergibt. Dieser Freibereich wird durch innere und äußere Kugelkontaktzonen begrenzt. Diese inneren und äußeren Kugelkontaktzonen erstrecken sich nicht bis an den Innen- bzw. Außenrand des jeweiligen Ringelementes, sondern halten gegenüber diesem einen gewissen Abstand ein. Dieser Abstand ist vorzugsweise so groß, dass im Bereich der Kontaktzonen keine durch Freistanzen der Ringelemente verursachten Materialverformungen, insbesondere Grate präsent sind.

### Kurze Beschreibung der Zeichnungen

Weitere Einzelheiten und Merkmale der Erfindung ergeben sich aus der nachfolgenden Beschreibung in Verbindung mit den Zeichnungen. Dabei zeigen:
- **Figur 1**: eine Axialschnitt-Detaildarstellung zur Erläuterung einer ersten Ausführungsform eines Rillenkugellagers das als solches mit einem erfindungsgemäßen Kugellagerkäfig ausgestattet ist;
- **Figur 2**: eine perspektivische Darstellung eines Ringelementes des Kugellagerkäfigs nach Figur 1;
- **Figur 3**: eine perspektivische Detail-Darstellung zur Veranschaulichung und Erläuterung weiterer Einzelheiten eines Ringelementes eines erfindungsgemäßen Kugellagerkäfigs;
- **Figur 4a**: eine Axialschnitt-Detaildarstellung ähnlich Figur 1 zur Veranschaulichung eines Zustands, bei welchem eine innere Kugelkontaktzone des Rinnenquerschnitts des Kugellagerkäfigs an der Kugel anläuft;
- **Figur 4b**: eine Axialschnitt-Detaildarstellung ähnlich Figur 1 zur Veranschaulichung eines Zustands, bei welchem eine äußere Kugelkontaktzone des Rinnenquerschnitts des Kugellagerkäfigs an der Kugel anläuft;
- **Figur 5a**: eine Axialschnitt-Detaildarstellung zur Veranschaulichung einer weiteren Käfigvariante in einem Zustand, bei welchem eine äußere Kugelkontaktzone des Rinnenquerschnitts des Kugellagerkäfigs an der Kugel anläuft;
- **Figur 5b**: eine Axialschnitt-Detaildarstellung zur Veranschaulichung der Käfigvariante nach Figur 5a in einem Zustand bei welchem eine innere Kugelkontaktzone des Rinnenquerschnitts des Kugellagerkäfigs an der Kugel anläuft;

### Ausführliche Beschreibung der Zeichnungen

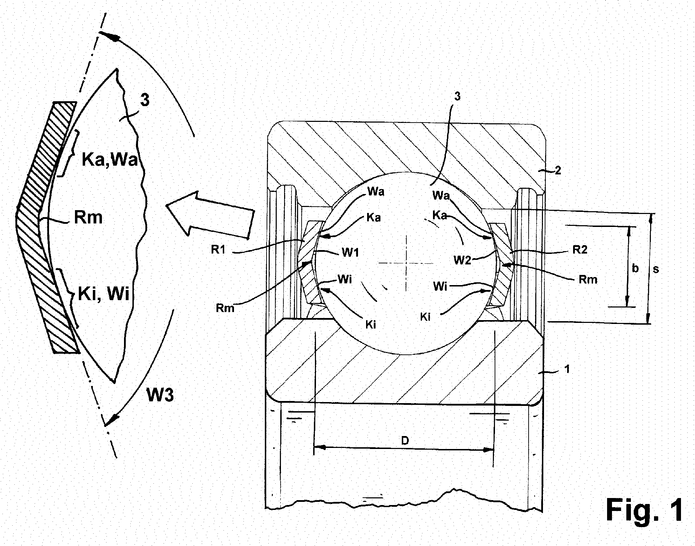

In Figur 1 ist ein Rillenkugellager dargestellt das mit einem erfindungsgemäßen Kugellagerkäfig ausgestattet ist. Das Rillenkugellager umfasst einen Lagerinnenring 1, einen Lageraußenring 2, sowie Kugeln 3 die in einem zwischen den beiden Lagerringen 1, 2 definierten Kugelbahnraum aufgenommen sind.

Die Kugeln 3 werden durch den erfindungsgemäßen Kugellagerkäfig geführt. Dieser Kugellagerkäfig besteht aus einem ersten Ringelement R1, das als Blechumformteil gefertigt ist und in Umfangsrichtung abfolgende und durch Sitzflächen getrennte axiale Auswölbungen aufweist. Der Kugellagerkäfig besteht weiterhin aus einem zweiten Ringelement R2, das ebenfalls als Blechumformteil gefertigt ist und ebenfalls in Umfangsrichtung abfolgende und durch Sitzflächen getrennte axiale Auswölbungen aufweist.

Die beiden Ringelemente R1, R2 werden so zusammengesetzt, dass diese sich über ihre Sitzflächen kontaktieren und zudem hierbei die Auswölbungen in entgegengesetzte Richtungen weisen. In diesem Montagezustand bilden die Auswölbungen die hier erkennbaren Kugelführungstaschen zur Aufnahme jeweils einer Kugel 3. Die Kugelführungstaschen bilden Auswölbungsinnenwandungen W1, W2. Diese Auswölbungsinnenwandungen erhalten erfindungsgemäß eine besondere Geometrie. So sind die Ringelemente R1, R2 im Bereich der Kugelführungstaschen so gestaltet, dass jene die Kugelführungstaschen begrenzenden Auswölbungsinnenwandungen W1, W2 einen zur Kugel 3 hin konkaven Rinnenquerschnitt mit einer inneren und einer äußeren Kugelkontaktzone Ki, Ka bilden. Es wird damit eine Wandungsgeometrie realisiert die eine ZweiZonenführung der Kugel zur Folge hat. Hierzu wird der Querschnitt so abgestimmt, dass dieser einen Rinnenquerschnitt bildet. Dieser Rinnenquerschnitt ist in einem zwischen den inneren und äußeren Kugelkontaktzonen liegenden Rinnenboden- oder Solenbereich Rm tiefer eingezogen als die an den Kugelkontaktzonen Ki, Ka anliegende Kugel 3 ausbaucht. Im Rinnenboden- oder Solenbereich entsteht damit ein Spalt.

Die hier beschriebene Querschnittsgestaltung richtet sich auf Querschnitte des Ringelement-Materiales in Schnittebenen, insbesondere Schnittebenenbündel die eine Radialachse enthalten, welche durch das Zentrum der jeweiligen Kugelführungstasche verläuft und dabei zur Lagerachse senkrecht steht. Die Kugelführungstasche kann so gestaltet sein, dass der in der beschriebenen Schnittebene vorliegende spezielle Rinnenquerschnitt sich über den überwiegenden Teil des Kugelumfangs erstreckt. Die Querschnittsgestaltung kann auch auf bestimmte Umfangszonen beschränkt sein, und zwar insbesondere auf solche Umfangszonen der Kugelführungstasche welche die Kugel in Umlaufrichtung stützen. In den lateralen Flankenbereichen kann von der erfindungsgemäßen Geometrie abgewichen werden. Auch der schmale, unmittelbar auf der Kugelzentrumsumlaufbahn liegende Übergangsbereich zwischen den Auswölbungen und den Ringsitzflächen kann lokal eine von der vorgeschlagenen Geometrie abweichende Geometrie beschreiben.

Wie insbesondere aus der in die Figur 1 eingebundenen Detailschnittansicht hervorgeht, ist bei dem hier gezeigten Ausführungsbeispiel der Rinnenquerschnitt derart konturiert, dass die innere Kugelkontaktzone Ki durch einen im hier vorliegenden Axialschnitt geradlinigen inneren Wandungsabschnitt Wi gebildet ist. Die äußere Kugelkontaktzone ist durch einen im Axialschnitt geradlinigen äußeren Wandungsabschnitt Wa gebildet. Die beiden im Axialschnitt geradlinigen inneren und äußeren Wandungsabschnitte Wi, Wa sind über einen Rinnenbodenabschnitt Rm verbunden. In diesem Rinnenbodenabschnitt Rm liegt eine Krümmung vor deren Radius kleiner ist als der halbe Kugeldurchmesser D. Der Kugellagerkäfig bildet einen "Dachquerschnitt" mit im Querschnitt lokal geraden Kontaktzonen Ki, Ka. Der Innenwinkel W3 bildet einen stumpfen Winkel von beispielsweise 150°. Die Konkavität des Käfigs zwischen diesen Kontaktzonen Ki, Ka ist größer als die Konvexität der Kugel 5, so dass sich im Bereich des Rinnenbodenabschnitts Rm zur Kugel 3 hin eine Spaltzone ergibt.

Die dem jeweiligen Ringrand benachbarten Außengrenzen der Kugelkontaktzonen sind vom Ringrand soweit beabstandet, dass deren Position nicht durch fertigungsbedingte Materialverformungen, insbesondere unterschiedlich ausgeprägte Randgrate des Blechmateriales bestimmt wird, und zudem diese Grate die Kugel 3 nicht erreichen können.

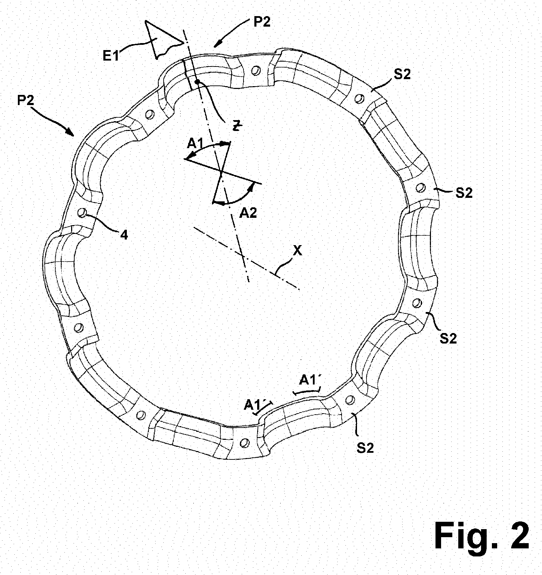

Die hier gezeigte Kugelführungstasche ist derart ausgebildet, dass sich eine geringe, jedoch prozesstechnisch höchst zuverlässig festlegbare radiale Kugelfreigängigkeit ergibt. Die Ringelemente R1, R2 sind als Stanz-Umformbauteile gefertigt und im Bereich der in Verbindung mit Figur 2 noch angesprochenen Sitzflächen vernietet. Die radiale Breite b der Ringelemente R1, R2 im Bereich der Kugelführungstaschen beträgt in etwa 40% bis 50% des Kugeldurchmessers.

Bei dem hier gezeigten Ausführungsbeispiel liegt die radiale Freigängigkeit der Kugel 3 in der Kugelführungstasche im Bereich von 1% bis 6% des halben Kugeldurchmessers D. Der Radialabstand der benachbarten Innengrenzen der Kugelkontaktzonen Ka, Ki liegt im Bereich von 60% bis 80%, der Ringbreite und liegt hier konkret bei 69%.

In Figur 2 ist in Form einer perspektivischen Darstellung das Ringelement R2 des Kugellagerkäfigs nach Figur 1 dargestellt. Dieses Ringelement R2 ist als Blechumformteil aus einem Stahlblech gefertigt. Das Ringelement R2 bildet mehrere in Umfangsrichtung abfolgende und durch Sitzflächen S2 getrennte axiale Auswölbungen P2. Das bei dem Kugellagerkäfig nach Figur 1 vorgesehene erste Ringelement R1 ist baugleich ausgeführt. Diese beiden Ringelemente R1, R2 werden über die Sitzflächen S2 zusammengesetzt und über die hier erkennbaren Bohrungen 4 vernietet. Das so gebildete Verbundbauteil bildet Kugelführungstaschen von - wie bezüglich Figur 1 bereits beschrieben - besonderer Gestalt. In Figur 1 wurde der Querschnitt der Ringelemente R1, R2 in einer Schnittebene E1 beschrieben die als solche durch die Lagerachse X und das Kugeltaschenzentrum Z der jeweiligen Kugelführungstasche P2 definiert ist. Die erfindungsgemäße Gestaltung des Rinnenquerschnitts muss sich nicht um den gesamten Umfang der Kugelführungstasche P2, also nicht über die gesamte Länge des Kugelführungsgürtels erstrecken. Vorzugsweise jedoch ist die erfindungsgemäße Querschnittsgestaltung wenigstens in den hier angedeuteten Winkelzonen A1, A2 vorgesehen. Die erfindungsgemäße Kugelführungstascheninnengeometrie kann auch auf separate Zonen angewendet werden, so dass sich lokale Führungspads mit der vorstehend beschriebenen Doppelkontaktführungsfunktion ergeben.

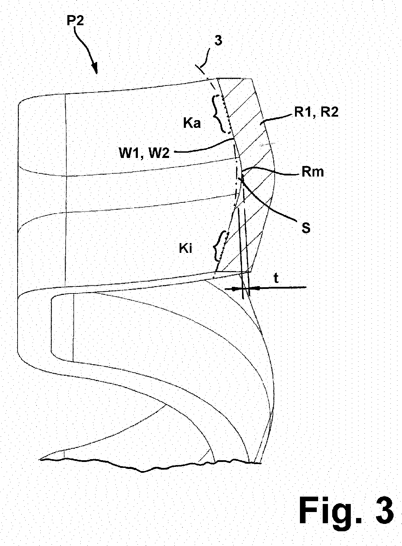

In Figur 3 ist die Spezialgeometrie der erfindungsgemäßen Riegelelemente R1, R2 weiter veranschaulicht. Wie bereits bezüglich Figur 1 beschrieben sind die Ringelemente R1, R2 derart ausgebildet, dass jene die Kugelführungstaschen P2 begrenzenden Auswölbungsinnenwandungen W1, W2 einen zur hier nur angedeuteten Kugel 3 hin konkaven Rinnenquerschnitt mit einer inneren und eine äußeren Kugelkontaktzone Ki, Ka bilden und der Rinnenquerschnitt in einem zwischen diesen inneren und äußeren Kugelkontaktzonen Ki, Ka liegenden Rinnenbereich Rm tiefer eingezogen ist als die an den Kugelkontaktzonen Ki, Ka anliegende Kugel 3 zu diesem inneren Rinnenbereich hin ausbaucht. In dem zwischen den inneren und äußern Kontaktzonen Ki, Ka liegenden Bereich ergibt sich damit bei Anlage der Kugel 3 an der Auswölbungsinnenwandung W1, W2 ein Zwischenraum S. Die maximale zwischen Kugel und Rinnenbereich Rm gemessene Tiefe t dieses Zwischenraumes liegt vorzugsweise im Bereich von 1% bis 7% des Kugeldurchmessers.

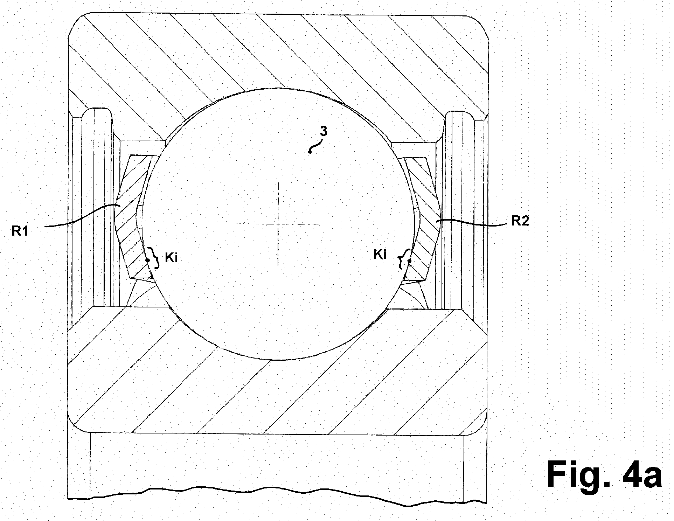

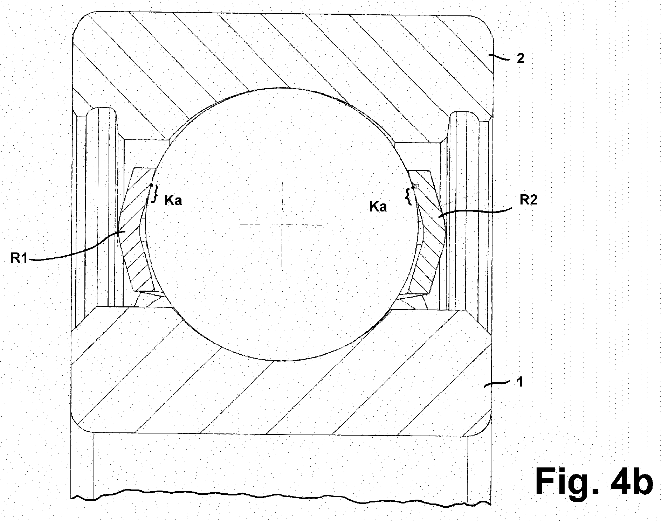

In Figur 4a ist ein Zustand veranschaulicht, in welchem der Kugellagerkäfig derart radial nach außen verlagert ist, dass die Ringelemente R1, R2 die Kugel 3 über ihre inneren Kugelkontaktzonen Ki kontaktieren. Im Übrigen gelten für diese Darstellung die Ausführungen zu Figur 1 sinngemäß. In der hier nicht dargestellten, diametral gegenüberliegenden Kugelführungstasche stützen sich die Ringelemente R1, R2 über die äußeren Kontaktzonen Ka an der entsprechenden Kugel ab. Dieser Kontaktzustand ist in Figur 4b veranschaulicht.

Wie aus Figur 4b ersichtlich, können die Ringelemente R1, R2 auch über ihre äußeren Kontaktzonen Ka an der Kugel 3 anlaufen und damit den durch die beiden Ringelemente R1, R2 gebildeten Kugellagerkäfig derart führen, dass dieser nicht an den Lagerringen 1, 2 anlaufen kann. Der Kugellagerkäfig ist damit zuverlässig wälzkörpergeführt.

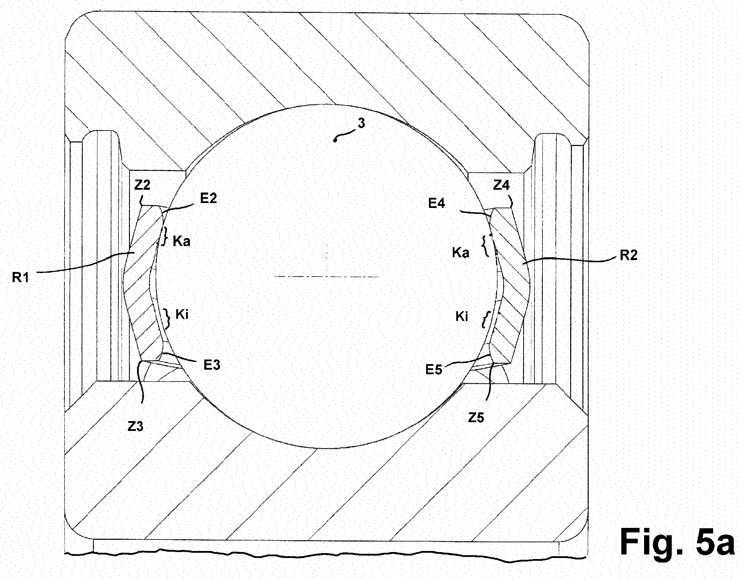

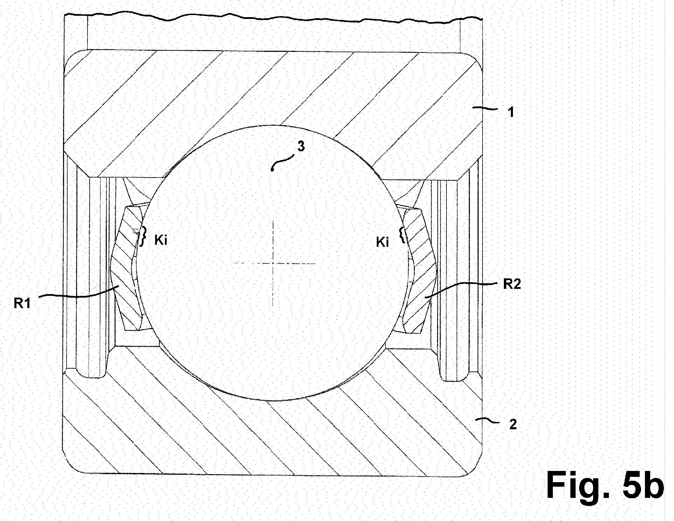

In den Figuren 5a und 5b ist ein Ausführungsbeispiel eines erfindungsgemäßen Kugellagerkäfigs dargestellt, bei welchem die Innenrandkanten E2, E3, E4, E5 der Ringelemente R1, R2 eine gewisse Verrundung aufweisen. Diese Verrundung kann erreicht werden, indem bei der Fertigung der Ringelemente R1, R2 die Stanzrichtung so gewählt wird, dass sich der Stanzgrat Z2, Z3, Z4, Z5 auf der, der Kugel 3 abgewandten Seite der Ringelemente R1, R2 bildet. Durch die Einwärtsverlagerung der Kugelkontaktzonen Ki, Ka zum Kugeläquator hin wird ein Kugellagerkäfig geschaffen der gegenüber bisherigen Bauformen verbesserte Lauf- und Führungseigenschaften bietet. In der Darstellung nach Figur 5a läuft der Kugellagerkäfig über seine äußeren Kontaktzonen Ka an der Kugel 3 an. An der diametral gegenüberliegenden Seite läuft der Kugellagerkäfig wie in Figur 5b dargestellt über die inneren Kontaktzonen Ki an der Kugel 3 an.

### Bezugszeichenliste

- 1: Lagerinnenring
- 2: Lageraußenring
- 3: Kugel
- A1: Winkelzone
- A2: Winkelzone
- b: Breite (Maß)
- D: Kugeldurchmessers
- E2: Innenrandkante
- E3: Innenrandkante
- E4: Innenrandkante
- E5: Innenrandkante
- Ka: äußere Kugelkontaktzone
- Ki: innere Kugelkontaktzone
- P2: Kugelführungstasche
- Rm: Rinnenboden- oder Solenbereich
- R1: Ringelement
- R2: Ringelement
- S2: Sitzfläche
- t: Tiefe (Maß)
- W1: Auswölbungsinnenwandung
- W2: Auswölbungsinnenwandung
- Wa: geradliniger äußerer Wandungsabschnitt
- Wi: geradliniger innerer Wandungsabschnitt
- W3: Innenwinkel
- X: Lagerachse
- Z: Kugeltaschenzentrum
- Z2: Stanzgrat
- Z3: Stanzgrat
- Z4: Stanzgrat
- Z5: Stanzgrat

## Patentansprüche

1. Kugellagerkäfig mit:
- einem ersten Ringelement (R1), das als Blechumformteil gefertigt ist und in Umfangsrichtung abfolgende und durch Sitzflächen (S2) getrennte axiale Auswölbungen aufweist,
- einem zweiten Ringelement (R2), das ebenfalls als Blechumformteil gefertigt ist und ebenfalls in Umfangsrichtung abfolgende und durch Sitzflächen (S2) getrennte axiale Auswölbungen aufweist,
- Kugelführungstaschen (P2), die unter Zusammensetzen der Sitzflächen (S2) der beiden Ringelemente (R1, R2) zwischen einander zugewandten Auswölbungsinnenwandungen (W1, W2) gebildet sind, zur Aufnahme jeweils einer Kugel (3), wobei
- die Ringelemente (R1, R2) derart ausgebildet sind, dass jene die Kugelführungstaschen (P2) begrenzenden Auswölbungsinnenwandungen (W1, W2) einen zur Kugel (3) hin konkaven Rinnenquerschnitt mit einer inneren und einer äußeren Kugelkontaktzone (Ki, Ka) begrenzen,
- der Rinnenquerschnitt in einem zwischen diesen inneren und äußeren Kugelkontaktzonen (Ki, Ka) liegenden inneren Rinnenbereich (Rm) derart tief ausgebildet ist, dass bei Anlage der Kugel (3) an den Kugelkontaktzonen (Ki, Ka) in jenem zwischen den Kugelkontaktzonen (Ki, Ka) liegenden Rinnenbereich (Rm), und der Kugel (3) ein Spalt (S) verbleibt,
- wobei die hier beschriebene Querschnittsgestaltung sich auf Schnittebenen richtet, die eine Radialachse enthalten welche durch das Zentrum der jeweiligen Kugelführungstasche verläuft und dabei zur Lagerachse senkrecht steht, und
- die Kugelführungstasche so gestaltet ist, dass der in den beschriebenen Schnittebenen vorliegende spezielle Rinnenguerschnitt sich über den überwiegenden Teil des Kugelumfangs erstreckt,
- **dadurch gekennzeichnet, dass**
- die innere Kugelkontaktzone (Ki) durch einen im Axialschnitt geradlinigen inneren Wandungsabschnitt (Wi) gebildet ist, und
- die äußere Kugelkontaktzone (Ka) durch einen im Axialschnitt geradlinigen äußeren Wandungsabschnitt (Wa) gebildet ist.

2. Kugellagerkäfig nach Anspruch 1, **dadurch gekennzeichnet, dass** die beiden im Axialschnitt geradlinigen inneren und äußeren Wandungsabschnitte (Wi, Wa) über einen Rinnenbodenabschnitt (Rm) verbunden sind, und in diesem Rinnenbodenabschnitt (Rm) eine Krümmung vorliegt deren Radius kleiner ist als der halbe Kugeldurchmesser (D).

3. Kugellagerkäfig nach Anspruch 1 oder 2, **dadurch gekennzeichnet, dass** die Kugelführungstaschen (P2) derart ausgebildet sind, dass sich eine geringe radiale Kugelfreigängigkeit ergibt.

4. Kugellagerkäfig nach wenigstens einem der Ansprüche 1 bis 3, **dadurch gekennzeichnet, dass** die Ringelemente (R1, R2) als Stanz-Umformbauteile gefertigt sind.

5. Kugellagerkäfig nach wenigstens einem der Ansprüche 1 bis 4, **dadurch gekennzeichnet, dass** die beiden Ringelemente (R1, R2) im Bereich der Sitzflächen vernietet sind.

6. Kugellagerkäfig nach wenigstens einem der Ansprüche 1 bis 5, **dadurch gekennzeichnet, dass** die radiale Breite (b) der Ringelemente (R1, R2) im Bereich der Kugelführungstaschen in etwa 40% bis 50%, vorzugsweise 44% des Kugeldurchmessers beträgt.

7. Kugellagerkäfig nach wenigstens einem der Ansprüche 1 bis 6, **dadurch gekennzeichnet, dass** der Radialabstand der einander benachbarten innengrenzen der Kugelkontaktzonen (Ki, Ka) etwa 20% der Ringbreite (b) beträgt.

8. Kugellagerkäfig nach wenigstens einem der Ansprüche 1 bis 7, **dadurch gekennzeichnet, dass** die Kugelkontaktzonen (Ki, Ka) zum inneren bzw. äußeren Rand der Ringelemente (R1, R2) einen Radialabstand von wenigstens 4% der Ringbreite (b) einhalten und der damit außerhalb der Kugelkontaktzonen (Ki, Ka) liegende Randbereich der Ringelemente die Kugeln nicht zu kontaktieren vermag.

## Claims

1. Ball bearing cage having:
- a first ring element (R1) which is manufactured as a sheet metal moulding and has axial protuberances which follow one another in the circumferential direction and are separated by seat faces (S2),
- a second ring element (R2) which is likewise manufactured as a sheet metal moulding and likewise has axial protuberances which follow one another in the circumferential direction and are separated by seat faces (S2),
- ball guiding pockets (P2) which are formed between protuberance inner walls (W1, W2) which face one another with assembly of the seat faces (S2) of the two ring elements (R1, R2), for receiving in each case one ball (3),
- the ring elements (R1, R2) being configured in such a way that those protuberance inner walls (W1, W2) which delimit the ball guiding pockets (P2) delimit a groove cross section which is concave towards the ball (3) with an inner and an outer ball contact zone (Ki, Ka),
- the groove cross section being configured in an inner groove region (Rm) which lies between the said inner and outer ball contact zones (Ki, Ka) to be so deep that, upon contact of the ball (3) with the ball contact zones (Ki, Ka), a gap (S) remains in that groove region (Rm) which lies between the ball contact zones (Ki, Ka), and the ball (3),
- the cross-sectional design which is described here being directed at sectional planes which contain a radial axis which runs through the centre of the respective ball guiding pocket and in the process lies perpendicularly with respect to the bearing axis, and
- the ball guiding pocket being designed in such a way that the specific groove cross section which is present in the described sectional planes extends over the predominant part of the ball circumference,
- **characterized in that**
- the inner ball contact zone (Ki) is formed by an inner wall section (Wi) which is rectilinear in axial section, and
- the outer ball contact zone (Ka) is formed by an outer wall section (Wa) which is rectilinear in axial section.

2. Ball bearing cage according to Claim 1, **characterized in that** the two inner and outer wall sections (Wi, Wa) which are rectilinear in axial section are connected via a groove bottom section (Rm), and there is a curve in the said groove bottom section (Rm), the radius of which curve is smaller than half the ball diameter (D).

3. Ball bearing cage according to Claim 1 or 2, **characterized in that** the ball guiding pockets (P2) are configured in such a way that the result is a slight radial freedom of movement of the ball.

4. Ball bearing cage according to at least one of Claims 1 to 3, **characterized in that** the ring elements (R1, R2) are manufactured as punched/formed components.

5. Ball bearing cage according to at least one of Claims 1 to 4, **characterized in that** the two ring elements (R1, R2) are riveted in the region of the seat faces.

6. Ball bearing cage according to at least one of Claims 1 to 5, **characterized in that** the radial width (b) of the ring elements (R1, R2) in the region of the ball guiding pockets is approximately from 40% to 50%, preferably 44% of the ball diameter.

7. Ball bearing cage according to at least one of Claims 1 to 6, **characterized in that** the radial spacing of the inner boundaries of the ball contact zones (Ki, Ka) which are adjacent with respect to one another is approximately 20% of the ring width (b).

8. Ball bearing cage according to at least one of Claims 1 to 7, **characterized in that** the ball contact zones (Ki, Ka) maintain a radial spacing of at least 4% of the ring width (b) from the inner and outer edge of the ring elements (R1, R2), and the edge region of the ring elements which therefore lies outside the ball contact zones (Ki, Ka) is not capable of making contact with the balls.

## Revendications

1. Cage de roulement à billes, comprenant :
- un premier élément annulaire (R1), qui est fabriqué sous forme de pièce façonnée en tôle et qui présente des courbures axiales successives dans la direction périphérique et séparées par des surfaces de siège (S2),
- un deuxième élément annulaire (R2), qui est également fabriqué sous forme de pièce façonnée en tôle et qui présente également des courbures axiales successives dans la direction périphérique et séparées par des surfaces de siège (S2),
- des cavités de guidage de billes (P2), qui sont formées par assemblage des surfaces de siège (S2) des deux éléments annulaires (R1, R2) entre des parois intérieures de courbures (W1, W2) tournées l'une vers l'autre, pouf recevoir à chaque fois une bille (3),
- les éléments annulaires (R1, R2) étant réalisés de telle sorte que les parois intérieures de courbures (W1, W2) qui limitent les cavités de guidage de billes (P2) limitent une section transversale de rainure concave vers la bille (3) avec une zone de contact de bille intérieure et une zone de contact de bille extérieure (Ki, Ka),
- la section transversale de rainure, dans une région de rainure intérieure (Rm) située entre ces zones de contact de bille intérieure et extérieure (Ki, Ka), étant réalisée avec une profondeur telle que lors de l'appui de la bille (3) contre les zones de contact de bille (Ki, Ka), dans la région de rainure (Rm) située entre les zones de contact de bille (Ki, Ka) et la bille (3), il subsiste une fente (S),
- la configuration en section transversale décrite ici se rapportant à des plans de coupe qui contiennent un axe radial qui s'étend à travers le centre de la cavité de guidage de bille respective, et qui est en l'occurrence perpendiculaire à l'axe de palier, et
- la cavité de guidage de bille étant configurée de telle sorte que la section transversale de rainure spéciale prévue dans les plans de coupe décrits s'étende sur la majeure partie de la périphérie de la bille,
- **caractérisée en ce que**
- la zone de contact de bille intérieure (Ki) est formée par une portion de paroi intérieure (Wi) rectiligne en coupe axiale, et
- la zone de contact de bille extérieure (Ka) est formée par une portion de paroi extérieure (Wa) rectiligne en coupe axiale.

2. Cage de roulement à billes selon la revendication 1, **caractérisée en ce que** les deux portions de paroi intérieure et extérieure rectilignes en coupe axiale (Wi, Wa) sont connectées par le biais d'une portion de fond de rainure (Rm) et dans cette portion de fond de rainure (Rm) est prévue une courbure dont le rayon est inférieur à la moitié du diamètre (D) de la bille.

3. Cage de roulement à billes selon la revendication 1 ou 2, **caractérisée en ce que** les cavités de guidage de bille (P2) sont réalisées de telle sorte que l'on obtient une faible liberté de mobilité radiale des billes.

4. Cage de roulement à billes selon au moins l'une quelconque des revendications 1 à 3, **caractérisée en ce que** les éléments annulaires (R1, R2) sont fabriqués sous forme de composants façonnés estampés.

5. Cage de roulement à billes selon au moins l'une quelconque des revendications 1 à 4, **caractérisée en ce que** les deux éléments annulaires (R1, R2) sont rivetés dans la région des surfaces de siège.

6. Cage de roulement à billes selon au moins l'une quelconque des revendications 1 à 5, **caractérisée en ce que** la largeur radiale (b) des éléments annulaires (R1, R2) dans la région des cavités de guidage de bille vaut environ 40 % à 50 %, de préférence 44 % du diamètre de la bille.

7. Cage de roulement à billes selon au moins l'une quelconque des revendications 1 à 6, **caractérisée en ce que** la distance radiale des limites intérieures adjacentes des zones de contact de bille (Ki, Ka) vaut environ 20 % de la largeur de l'anneau (b).

8. Cage de roulement à billes selon au moins l'une quelconque des revendications 1 à 7, **caractérisée en ce que** les zones de contact de bille (Ki, Ka) par rapport au bord intérieur ou extérieur des éléments annulaires (R1, R2), présentent une distance radiale d'au moins 4 % de la largeur de l'anneau (b) et la région de bord des éléments annulaires située à l'extérieur des zones de contact de bille (Ki, Ka) ne peut pas venir en contact avec les billes.
